# EUROPEAN PATENT SPECIFICATION

(11) **EP 3 462 047 B1**
(45) Date of publication and mention of the grant of the patent: **28.07.2021**
(21) Application number: 17194380.6
(22) Date of filing: 02.10.2017
(51) Int. Cl.: F16C 1/10, E05B 79/20, F16C 1/12, E05B 83/24

(54) **BOWDEN CABLE ASSEMBLY FOR DOUBLE LATCHING SYSTEM**
BOWDENZUGANORDNUNG FÜR EIN DOPPELVERRIEGELUNGSSYSTEM
ENSEMBLE DE CÂBLE BOWDEN POUR DOUBLE SYSTÈME DE VERROUILLAGE

(43) Date of publication of application: 03.04.2019
(73) Proprietor: FICO CABLES LDA, 4471 Maia (PT)
(72) Inventor: CARNEIRO, Marco, 4470-263 Vermoim-Maia (PT); LOPES, Pedro, 4470-263 Vermoim-Maia (PT)
(74) Representative: Mader, Joachim

(56) References cited:
- DE-A1-102008 034 770
- US-A- 4 526 057
- US-A- 5 235 870
- US-A1- 2017 254 354

## Description

### 1. Field of the invention

The present invention relates to a Bowden cable assembly for double latching systems. In double latching systems two latches are provided for example at a hood of a motor vehicle for holding the hood in the closed condition, for improving the safety requirements.

### 2. Prior art

Usually a motor vehicle hood is held in the closed position by at least one latch, which can be actuated manually by the driver from the inside of the motor vehicle. For security reasons, the hood release process is at least a two-step process. A first actuation step by the driver usually from the inside of the passenger compartment actuates at least one latch to a pre-release position. From the pre-release position the driver then can open the hood manually by performing a second release step usually outside the passenger compartment. This avoids damaging the hood by unintentionally releasing the hood while driving.

Bowden cables are used for the first step release of hood latches in motor vehicles since decades. Whereas in the past usually only one hood latch was employed nowadays for construction reasons two hood latches are used. Today, double latching systems are common in the field of vehicle manufacturing and in particular in hood systems but also in other fields where two latches are actuated commonly. Thus, two Bowden cables are required for the simultaneous activation of the first step release of two hood latches.

Prior art Bowden cables in general require specific length adjustment by special adjustment means. Such adjustment is prone to mounting faults and consumes mounting time. Further, Bowden cables for latches of hoods have to be reliable as broken cables require special tools to open the hood and replacement of the cable is difficult. On the other hand, Bowden cables for latches of hood systems need to transmit comparably high forces.

Document US 5 235 870 describes automotive brake systems particularly for parking brakes. Thereby, a first cable serves both as a link with a foot or hand brake and to set one of the brakes-typically the right rear brake.

Document US 4 526 057 describes a push-pull cable arrangement for selectively transmitting longitudinal motion to two separate destinations. Thereby, when the inner wire is pulled a pull motion is transmitted to the rear end of the wire, and when the wire is pushed, this movement is transmitted to another destination.

Document DE 10 2008 034 770 A1 describes a remote controlled cable clutch, wherein the end of one of the traction cables and the guide of the other traction cable are attached to the coupling slide, while the end of the other traction cable is fixed to the coupling housing.
Document US 2017/0254354 A1 describes cable splitter devices, assemblies, and methods of use, wherein a cable splitter assembly includes a housing, a slider, first cables, and second cables. Furthermore, a clipping element may be configured to fix a longitudinal position of a respective first cable at multiple different locations along the first channel.

For double latching systems there is the need to provide a Bowden cable system that eliminates the need for cable length adjustment, that assures synchronism of actuation for both latches, particularly of the hood, that is reliable in operation and easy to assemble.

### 3. Summary of the invention

The above mentioned problems are solved by a Bowden cable assembly for double latching systems according to claim 1, a double latching hood locking system of a motor vehicle comprising a Bowden cable assembly according to claim 12, a Bowden cable connector according to claim 13 and a method for the activation of a double latching system according to claim 14. The dependent claims describe further embodiments of the invention. Thereby, at least one exemplary embodiment of the present invention is applicable in the field of vehicles, and more specifically for the actuation of double latching hood systems of vehicles.

In particular the above mentioned problems are solved by a Bowden cable assembly for double latching systems comprising an actuating Bowden cable, comprising an actuating inner cable and an actuating conduit, a first driven Bowden cable, comprising a first inner cable and a first conduit, a second driven Bowden cable, comprising a second inner cable and a second conduit, a housing, and a slider, that can slide in axial direction within the housing, wherein the actuating inner cable is connected to the first inner cable, the actuating conduit is connected to the slider, and the second inner cable is connected to the slider.

Such a construction of a Bowden cable assembly allows the transmission of forces from the actuation Bowden cable simultaneously to the first driven Bowden cable and to the second driven Bowden cable. Since the slider can axially slide within the housing the force of the actuation Bowden cable is equally applied to both the driven Bowden cables equally. This automatic force distribution is based on the structural construction of the Bowden cable assembly and allows to eliminate any adjustment means. The slider equally distributes the actuation force determined by the distance between the actuating conduit and the actuating inner cable end fitting. The Bowden cable assembly of the invention is self-adjusting.

When the actuating force is gradually increasing, first of all, the actuating inner cable only moves the first inner cable. At a later point in time, when the forces are balanced, the assembly continues moving the first inner cable and starts pushing the slider with the movement of the actuating conduit. Thus, first inner cable and second inner cable are pulled simultaneously for releasing both latches.

This also facilitates assembly of the Bowden cable assembly within a motor vehicle. The Bowden cable assembly preferably can be pre-assembled. The use of a slider that can axially slide within a housing provides a very reliable and robust force distribution solution that is capable to transmit high forces. None of the Bowden cables used is necessarily bend to a significant amount within the Bowden cable assembly.

Further, the Bowden cable assembly improves security of the hood latching in case of an accident. When the hood of a vehicle suffers an impact in a frontal crash at least a portion of the hood or the frontal car body modifies its structure. If, in a prior art Bowden cable assembly, a Bowden cable is attached to said modified hood or car body portion, said Bowden cable, i.e. its inner cable as well as the conduit, could suffer an elongation, which might lead to a pulling force on all Bowden cables of the systems which might lead to an undesired opening of both latches. By using the Bowden cable assembly of the present invention, as the actuating Bowden cable does not actuate both driven Bowden cables by pulling, given that the second driven Bowden cable is actuated by pushing of the actuating conduit, the chances that at least one latch of a hood remains closed after a frontal crash are highly increased.

The housing having in axial direction a first end and an opposing second end and wherein the first conduit is connected to the first end of the housing and/or preferably the second conduit is connected to the second end of the housing. This provides a reliable vehicle independent mounting of the first conduit and the second conduit.

Preferably, the housing having in axial direction a first end and an opposing second end and wherein the first conduit is connected to a fixed part to which also the housing is connected, at the first end of the housing, and/or the second conduit is connected to a fixed part to which also the housing is connected, at the second end of the housing. The housing can be mounted to the vehicle or hood and the first and/or second conduit can be mounted directly to the vehicle or hood or similar stationary parts of the vehicle. This might ease the installation and/or provide for a stronger mounting.

Preferably, the Bowden cable assembly is further comprising a biasing means, preferably a spring, that urges the slider to the second side of the housing. The biasing means serves to return the Bowden cable assembly into the non-actuated position. Thus, there is a defined mounting position of the Bowden cables.

Preferably, the slider having a slider first side and a slider second side opposite to the slider first side, and the actuating conduit and the second inner cable are attached to the slider in axial direction at the same slider first side. Thus, when the actuating conduit pushes the slider against the force of the biasing means the second inner cable is tightened.

Preferably, the slider having a slider first side and a slider second side opposite to the slider first side, and the slider comprises a slider receptacle for the actuating conduit in its slider first side where the actuating conduit is attached.

Preferably, the slider receptacle extends through an opening of the housing to the outside of the housing. The slider receptacle thus provides together with the opening of the housing a reliable bearing for the axial movement of the slider within the housing.

Preferably, the slider having a slider first side and a slider second side opposite to the slider first side, and the slider comprises a rod-shaped extension on its slider second side.

Preferably, the rod-shaped extension of the slider extends through an opening of the housing to the outside of the housing. The rod-shaped extension on the slider second side provides a second bearing for the axial movement of the slider within the housing.

Preferably, the housing comprises a lid. The lid may be hinged to a base part of the housing by for example, one film hinge or may be and independent element. Thus, if the lid is hinged by one film hinge, the housing can be manufactured together with its lid as one single part. By the lid the housing can be opened and closed for easy access to the interior, particularly for the assembly of the Bowden cable assembly.

Preferably, the housing or the lid comprises at least one closing means for closing the housing. Preferably, the closing means can be at least one snapping hook, for closing the housing. By means of closing means, preferably a snapping hook, the lid can reliably be held in closed position. The closing of the housing with the snapping hook can be done preferably manually without any tools.

Preferably, the actuating conduit is arranged to have at least a portion thereof to be fixed to a motor vehicle and to have at least its end portion being able to axially float relative to the motor vehicle. Preferably, a first part of the actuation movement applied from the actuating Bowden cable to the driven Bowden cables is generated by an axial movement of the actuating conduit. The remaining second part of the actuation movement is preferably generated by the axial movement of the actuating inner cable. Thus, in this embodiment an end portion of the actuating conduit is neither fixed to the motor vehicle nor to the housing of the Bowden cable assembly.

Once the user actuates the Bowden cable assembly, the traction on the actuating inner cable will pull the first inner cable. Once the force on the first inner cable is higher than the force on the second inner cable the slider will slide, since the actuating conduit generates a compression force equal to the traction force applied on the second inner cable. This equalizes the forces on the first and second inner cables for actuating the respective latches of the motor vehicle hood.

Preferably, the housing and/or the first conduit and/or the second conduit are arranged to be rigidly fixed to a motor vehicle. On the other hand, the housing, the first conduit and the second conduit can be rigidly fixed to a motor vehicle.

The above mentioned problems can also be solved by a double latching hood locking system of a motor vehicle comprising a Bowden cable assembly as described above, wherein the first driven Bowden cable actuates a first latch of a hood and the second driven Bowden cable actuates a second latch of the hood.

The above mentioned problems can also be solved by a Bowden cable connector for double latching hood systems comprising a housing and a slider, that can slide in axial direction within the housing, wherein the slider is connectable to an actuating conduit of an actuating Bowden cable, the slider is connectable to a second inner cable of a second driven Bowden cable, and the housing further comprises a space, wherein a first inner cable of a first driven Bowden cable can be connected to an actuating inner cable of the actuating Bowden cable and wherein the connection between the first inner cable and the actuating inner cable can axially slide within the space.

The Bowden cable connector is a subassembly and the main part of the Bowden cable assembly and realizes the same advantages as described above in view of the Bowden cable assembly. As the slider can axially slide within the housing and a space is provided for an end-fitting that connects a first inner cable of a driven Bowden cable to an actuating inner cable of the actuating Bowden cable actuating forces of the actuating Bowden cable are transmitted equally to the first and second driven Bowden cables, thereby eliminating the need for length-adjustment of the Bowden cables.

The above mentioned problems can also be solved by a method for the activation of a double latching system, comprising the following steps:
a. tightening an actuating Bowden cable comprising of an actuating conduit and an actuating inner cable;
b. pulling a first inner cable of a first driven Bowden cable by the actuating inner cable;
c. pushing a slider by the actuating conduit, such that the slider can axially slide within a housing;
d. pulling a second inner cable of a second driven Bowden cable by the slider;
e. actuating a first latch of a motor vehicle hood by the first driven Bowden cable; and
f. actuating a second latch of the motor vehicle hood by the second driven Bowden cable.

By the method according to the invention the same advantages in terms of automatic force distribution, self-adjustment and reliability are achieved as for the Bowden cable assembly described above.

Preferably, the method further comprises the steps of holding a first conduit of the first driven Bowden cable and a second conduit of the second driven Bowden cable at opposite ends of the housing.

Preferably, the method further comprising the step of pushing the slider to the second side of the housing by biasing means, preferably a spring. The second side of the housing is where the actuating Bowden cable extends through the housing.

Preferably, the step of tightening the actuating Bowden cable is performed via a hand lever accessible to a driver of the motor vehicle. Thus, the driver can easily actuate the double latching hood system by pulling a hand lever at the end of the actuating Bowden cable.

### 4. Short description of the drawings

In the following preferred embodiments of the invention are described by means of the drawings. In which shows:
- Fig. 1: a schematic top view of a double latching hood system with a preferred embodiment of a Bowden cable assembly according to the invention, wherein the housing of the Bowden cable assembly is shown in open position;
- Fig. 2: a three dimensional, partially cut away and exploded view of the Bowden cable assembly of Fig. 1;
- Fig. 3: a top view of the Bowden cable assembly of Fig. 2 in rest condition;
- Fig. 4: a top view of the Bowden cable assembly of Fig. 2 in an initial partially actuated condition;
- Fig. 5: a top view of the Bowden cable assembly of Fig. 2 in further partially actuated condition;
- Fig. 6: a top view of the Bowden cable assembly of Fig. 2 in maximum actuated condition;
- Fig. 7: a three dimensional view of the housing of the Bowden cable assembly of Fig. 2 in open condition;
- Fig. 8: a top view of the housing of Fig. 6; and
- Fig. 9: a three-dimensional view of the slider of the Bowden cable assembly of Fig. 2.

### 5. Detailed description of preferred embodiments

In the following preferred embodiments of the invention are described in detail by means of the drawings.

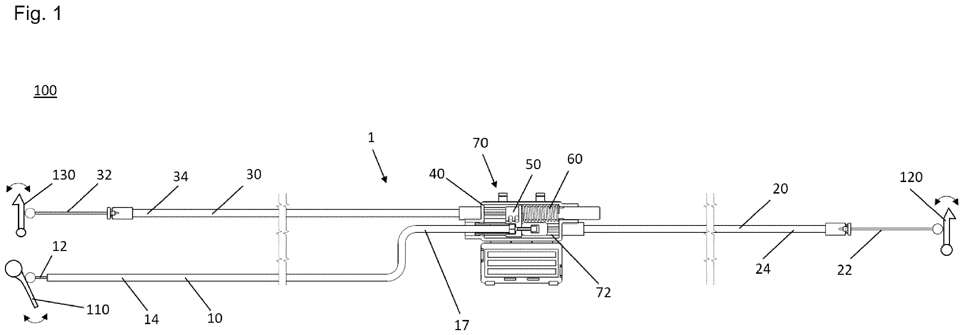

Fig. 1 shows a schematic top view of a double latching hood system 100 that is actuated by a preferred embodiment of a Bowden cable assembly 1. The double latching hood system 100 comprises a first latch 120, locking a first portion of a motor vehicle hood, a second latch 130, locking a second portion of the motor vehicle hood and a hand lever 110 that can be actuated by a driver of the motor vehicle. The hand lever 110 is connected to the Bowden cable assembly 1 via an actuating Bowden cable 10. The first latch 120 is connected the Bowden cable assembly 1 via a first driven Bowden cable 20 and the second latch 130 is connected to the Bowden cable assembly 1 via a second driven Bowden cable 30.

The actuating Bowden cable 10 comprises an actuating inner cable 12 and an actuating conduit 14. The first driven Bowden cable 20 comprises a first inner cable 22 and a first conduit 24. The second driven Bowden cable 30 comprises a second inner cable 32 and a second conduit 34.

If the driver preferably pulls the hand lever 110 a force is introduced into the actuating Bowden cable 10. This force first pulls the first inner cable 22 of the first driven Bowden cable 20. When the force on the actuating Bowden cable 10 and on the first driven Bowden cable 20 is balanced, any further actuation force will be transmitted in equal amount to the first driven Bowden cable 20 and the second driven Bowden cable 30 which actuate the first 120 and second latch 130 for at least partially opening the hood of a motor vehicle (not shown).

As schematically shown in Fig. 1 the hand lever 110 and the first and second latches 120, 130 are connected to the inner cables 12, 22, 32 of the respective Bowden cables 10, 20, 30. However, for actuation the hand lever 110 and the first and second latches 120, 130 could also be connected to the outer conduits 14, 24, 34 of the respective Bowden cables 10, 20, 30 as desired in the actual actuation situation.

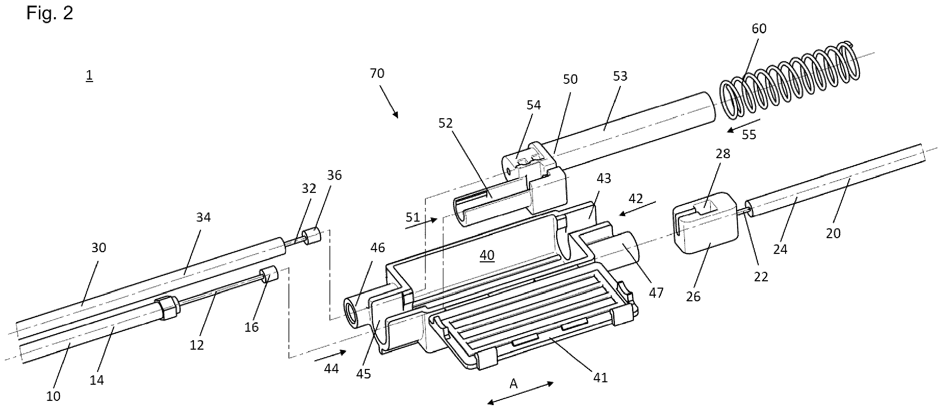

Fig. 2 shows Bowden cable assembly 1 in an exploded view. The Bowden cable assembly 1 further comprises a Bowden cable connector 70 which is a subassembly comprising a housing 40, having a hinged lid 41, a slider 50, a biasing means 60 and a space 72. As shown in the figures the biasing means 60 is helical spring 60. The housing 40 has in axial direction A a first end 42 and an opposing second end 44.

The slider 50 is supported within the housing 40 such that it can freely slide in axial direction A within the housing 40 for force distribution. The slider 50 comprises a slider first side 51 and a slider second side 55 opposite to the slider first side 51, wherein in the slider first side 51 there is a receptacle for actuating conduit 52 that extends in from the slider first side 51 in axial direction A.

The space 72 within the housing 40 allows that an end-fitting 26 of the first inner cable 22 can be connected to the actuating inner cable 12 such that the end-fitting 26 can axially slide within the space 72.

The dashed lines in Fig. 2 illustrate, how the components of the Bowden cable assembly 1 are assembled:

The receptacle for actuating conduit 52 accommodates the end of the actuating conduit 14. Thus, the actuating conduit 14 is connected to the slider 50.

Further, the receptacle for actuating conduit 52 extends through an opening 45 of the housing 40 to the outside of the housing 40. On the other side of the slider 50 a rod-shaped extension 53 of the slider 50, parallel to the receptacle for actuating conduit 52, extends through an opening 43 of the housing 40 to the outside of the housing 40. The receptacle for actuating conduit 52 and the rod-shaped extension 53 are supported by the housing 40 by the respective openings 43 and 45 for providing the axial slide-ability of the slider 50. The rod-shaped extension 53 further receives a helical spring 60 that urges the slider 50 to the second side 44 of the housing 40. The slider 50 further comprises a receptacle for second inner cable end fitting 54 for receiving an end fitting 36 of the inner cable 32 of the second driven Bowden cable 30.

The actuating inner cable 12 of the actuating Bowden cable 10 is connected to the first inner cable 22 of the first driven Bowden cable 20. The connection is done inside of the housing 40 via the first inner cable end fitting 26 comprising a receptacle for end fitting of actuating inner cable 28 for receiving an actuating inner cable end fitting 16.

The first conduit 24 is connected to the first end 42 of the housing at a receptacle for first conduit 47 of the housing 40. The second conduit 34 of the second driven Bowden cable 30 is connected to the second end 44 of the housing 40 at a receptacle for second conduit 46 of the housing 40.

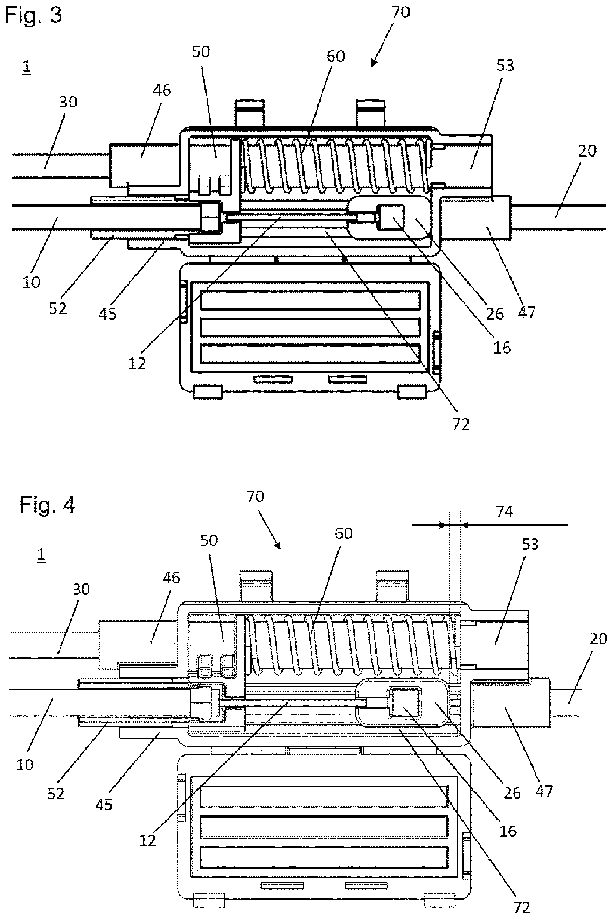

The Figs. 3 to 6 illustrate the function of the Bowden cable assembly 1 during actuation:
Fig. 3 shows the rest condition of the Bowden cable assembly **1.** The actuating Bowden cable 10 is not actuated by the hand lever 110. Thus, the actuating inner cable 12 is fully extended and the first inner cable end fitting 26 may abut the inner wall of the housing 40 at the first side 42 of the housing 40. Further, the spring 60 pushes the slider 50 to the second side 44 of the housing 40 such that the slider 50 may abut the inner wall of the housing 40. In this rest condition the driven Bowden cables 20, 30 are relaxed and don't exert a force to the respective first and second latches 120, 130. In this rest condition the latches 120, 130 are in a position for locking the hood of the motor vehicle (not shown). In this condition the receptacle for actuating conduit 52 extends through the opening 45 to the outside of the housing 40.

Fig. 4 shows the Bowden cable assembly 1 in partially actuated condition after an initial actuation. In this condition the user initially pulled the hand lever 110 slightly and introduced a first initial force to the actuating Bowden cable 10. The actuating inner cable 12 thus pulls the first inner cable 22 by an initial first stroke 74 and tightens the first driven Bowden cable 20. In this condition the slider 50 did not move, yet. However, it should be noted that as the first inner cable 22 is already pulled by the actuating inner cable 12, it may be that the first latch 120 can be closed or semi open, depending on the needed strength that the system 100 need to be balanced. If the user then increases the force introduced into the actuating Bowden cable 10 until the force on the actuating Bowden cable 10 and on the first driven Bowden cable 20 is balanced, any further actuation force will be transmitted in equal amount to the first driven Bowden cable 20 and the second driven Bowden cable 30. Then the slider 50 starts moving and pulls the second inner cable 32 and guarantees an equilibrium of forces on the driven Bowden cables 20, 30.

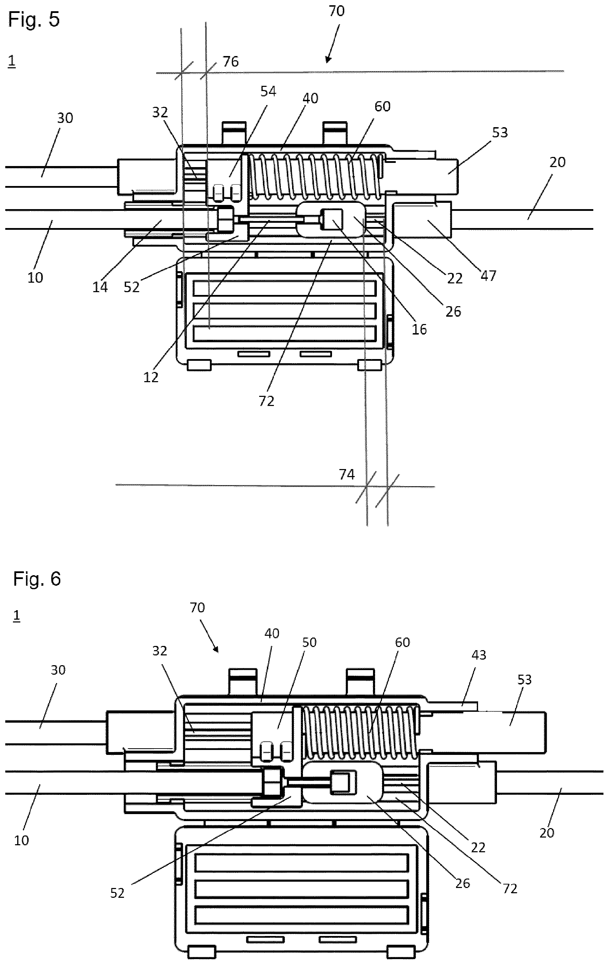

Fig. 5 shows the Bowden cable assembly 1 in this further partially actuated condition. In this condition the latches 120, 130 may be in a position for just releasing the hood of the motor vehicle. The actuating Bowden cable 10 is tightened by some extend via the hand lever 110. Thus, the actuating inner cable 12 of the actuating Bowden cable 10 continues pulling the first inner cable 22 of the first driven Bowden cable 20 enlarging the first stroke 74, which may correspond to the first latch opening stroke 74. Thereby, the first driven Bowden cable 20 is tightened by the extend of the first latch opening stroke 74 as illustrated in Fig. 4. This first latch opening stroke 74 is at least necessary to open the first latch 120. Further, the actuating conduit 14 pushes the slider 50 against the force of the spring 60 such that the slider 50 can axially slide within the housing 40. By this movement by a second extend, which may correspond to the second latch opening stroke 76, the slider 50 pulls the second inner cable 32 of a second driven Bowden cable 30. Thereby, the second driven Bowden cable 30 is tightened by the extend of the second latch opening stroke 76 as illustrated in Fig. 5. This second latch opening stroke 76 is at least necessary to open the second latch 130. The latch opening strokes 74, 76 may be not necessarily the same, usually the first latch 120 opens earlier than the second latch 130. But the Bowden cable assembly 1 automatically removes and slacks the tolerances of the Bowden cables 10, 20 and 30 and guarantees a balancing of the force for the actuation of the latches 120, 130. It has to be noted, that regarding this force balancing the force of the biasing means 60 is neglected.

As the actuating Bowden cable 10 on the one hand pulls the first inner cable 22 and pushes the slider 50, which pulls the second inner cable 32 an automatic force distribution of the actuating forces is provided between the first 20 and second driven Bowden cables 30. Thus, there is no need for an adjustment between the driven Bowden cables 20, 30. As the latch opening stroke is smaller than the full stroke the driven Bowden cables 20, 30 can perform there is no need for a length adjustment of the Bowden cables 10, 20 and 30.

Fig. 6 shows the Bowden cable assembly 1 in fully actuated condition. In this condition the latches 120, 130 are already unlocked and may still be in a position for releasing the hood of the motor vehicle. The actuating Bowden cable 10 is fully tightened such that the slider 50 abuts the first inner cable end fitting 26. The stroke available in the Bowden cable assembly 1 is able to do the complete opening stroke of the latches 120, 130 plus the estimated slack. The driven Bowden cables 20, 30 are fully tightened in this condition. Further, the rod-shaped extension 53 may extend through the opening 43 to the outside of the housing.

This functioning of the Bowden cable assembly 1 can be described by a method for the activation of the double latching hood system 100, comprising the following steps:
a. tightening the actuating Bowden 10 cable comprising of the actuating conduit 14 and the actuating inner cable 12;
b. pulling the first inner cable 22 of a first driven Bowden cable 20 by the actuating inner cable 12;
c. pushing the slider 50 by the actuating conduit 14, such that the slider 50 can axially slide within the housing 40;
d. pulling the second inner cable 32 of the second driven Bowden cable 30 by the slider 50;
e. actuating a first latch 120 of a motor vehicle hood by the first driven Bowden cable 20; and
f. actuating a second latch 130 of the motor vehicle hood by the second driven Bowden cable 30.

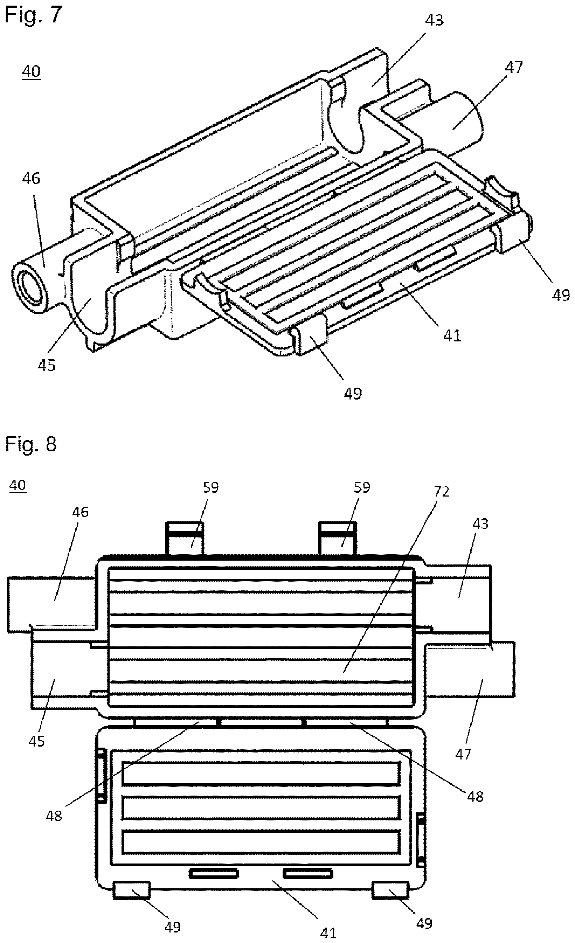

Figs. 7 and 8 show the details of the housing 40. The housing 40 is integrally injection molded out of a plastic material, preferably PP. It further comprises two film hinges 48 for hinging the lid 41 to the main body of the housing 40. The lid 41 further comprises two snapping hooks 49 for closing the housing 40 after assembly. The lid 41 secures the slider 50 and the first inner cable end fitting 26 within the housing 40 what makes assembly easy and fast. The housing 40 may further comprise mounting means 59 for mounting the Bowden cable assembly 1 at the motor vehicle.

As the actuating conduit 14 moves relative to the housing 40 at least an end portion 17 of the actuating conduit 14 (see Fig. 1) is not rigidly fixed to a motor vehicle but can axially float relative to the motor vehicle. On the other hand, the housing 40 and/or the first conduit 24 and/or the second conduit 34 can be rigidly fixed to the motor vehicle.

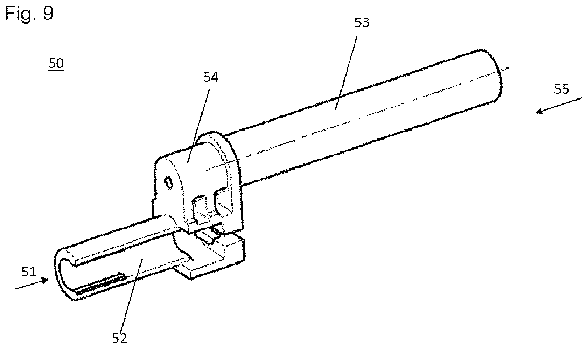

Fig. 9 shows the details of the slider 50, which is also integrally injection molded out of a plastic material, preferably PP.

### List of reference signs

- 1: Bowden cable assembly
- 10: actuating Bowden cable
- 12: actuating inner cable
- 14: actuating conduit
- 16: actuating inner cable end fitting
- 17: end portion
- 20: first driven Bowden cable
- 22: first inner cable
- 24: first conduit
- 26: first inner cable end fitting
- 28: receptacle for end fitting of actuating inner cable
- 30: second driven Bowden cable
- 32: second inner cable
- 34: second conduit
- 36: second cable end fitting
- 40: housing
- 41: lid
- 42: first end/side of housing
- 43: opening for rod-shaped extension
- 44: second end/side of housing
- 45: opening for receptacle for actuating conduit
- 46: receptacle for second conduit
- 47: receptacle for first conduit
- 48: film hinges
- 49: snapping hooks
- 50: slider
- 51: slider first side
- 52: receptacle for actuating conduit
- 53: rod-shaped extension
- 54: receptacle for second inner cable end fitting
- 55: slider second side
- 59: mounting means
- 60: biasing means / spring
- 70: Bowden cable connector
- 72: space for end-fitting of first inner cable
- 74: first stroke / first latch opening stroke
- 76: second latch opening stroke
- 100: double latching hood system
- 110: hand lever
- 120: first latch
- 130: second latch

## Claims

1. Bowden cable assembly (1) for double latching systems comprising:
a. an actuating Bowden cable (10), comprising an actuating inner cable (12), an actuating conduit (14) and an actuating inner cable end fitting (16);
b. a first driven Bowden cable (20), comprising a first inner cable (22), a first conduit (24) and a first inner cable end fitting (26)
comprising a receptacle (28) for the end fitting of the actuating inner cable (12) for receiving the actuating inner cable end fitting (16);
c. a second driven Bowden cable (30), comprising a second inner cable (32) and a second conduit (34);
d. a housing (40) having in axial direction a first end (42) and an opposing second end (44), and wherein
e. the first conduit (24) is connected to the first end (42) of the housing (40); and
f. a slider (50), that can slide in an axial direction within the housing (40); wherein
g. the actuating inner cable (12) is connected to the first inner cable (22), wherein the actuating inner cable end fitting (16) is received within the receptacle of the first inner cable end fitting (26) inside the housing (40);
h. the actuating conduit (14) is connected to the slider (50);
i. the second inner cable (32) is connected to the slider (50).

2. Bowden cable assembly according to claim 1, wherein the second conduit (34) is connected to the second end (44) of the housing (40).

3. Bowden cable assembly according to claim 1, wherein the housing (40), having in axial direction a first end (42) and an opposing second end (44), and wherein
a. the first conduit (24) is connected to a fixed part to which also the housing (40) is connected, at the first end (42) of the housing (40); and/or
b. the second conduit (34) is connected to a fixed part to which also the housing (40) is connected, at the second end (44) of the housing (40).

4. Bowden cable assembly according to one of the claims 1 to 3, further comprising a biasing means (60), that urges the slider (50) to the second side (44) of the housing (40).

5. Bowden cable assembly according to one of the claims 1 to 4, wherein
a. the slider (50) having a slider first side (51) and a slider second side (55) opposite to the slider first side (51), and
b. the actuating conduit (14) and the second inner cable (32) are attached to the slider (50) in axial direction at the same slider first side (51).

6. Bowden cable assembly according to one of the claims 1 to 5, wherein
a. the slider (50) having a slider first side (51) and a slider second side (55) opposite to the slider first side (51), and
b. the slider (50) comprises a slider receptacle (52) for the actuating conduit (14) in its slider first side (51) where the actuating conduit is attached.

7. Bowden cable assembly according to one of the claims 1 to 6, wherein
a. the slider (50) having a slider first side (51) and a slider second side (55) opposite to the slider first side (51), and
b. the slider (50) comprises a rod-shaped extension (53) on its slider second side (55).

8. Bowden cable assembly according to one of the claims 1 to 7, wherein the housing (40) comprises a lid (41).

9. Bowden cable assembly according to claim 8, wherein the housing (40) or the lid (41) comprises at least one closing means (49) for closing the housing (40).

10. Bowden cable assembly according to one of the claims 1 to 9, wherein the actuating conduit (14) is arranged to have at least a portion thereof to be fixed to a motor vehicle and to have at least its end portion (17) being able to axially float relative to the motor vehicle.

11. Bowden cable assembly according to one of the claims 1 to 10, wherein the housing (40) and/or the first conduit (24) and/or the second conduit (34) are arranged to be rigidly fixed to a motor vehicle.

12. Double latching hood locking system (100) of a motor vehicle comprising a Bowden cable assembly (1) according to one of the claims 1 - 11 wherein the first driven Bowden cable (20) actuates a first latch (120) of a hood and the second driven Bowden cable (30) actuates a second latch (130) of the hood.

13. Bowden cable connector (70) for double latching systems comprising:
a. a housing (40); and
b. a slider (50), that can slide in axial direction within the housing (40);
c. wherein the slider (50) is connectable to an actuating conduit (14) of an actuating Bowden cable (10);
d. the slider (50) is connectable to a second inner cable (32) of a second driven Bowden cable (30);
e. the housing (40) further comprises a space (72) wherein a connection between a first inner cable (22) of a first driven Bowden cable (20) and an actuating inner cable (12) of the actuating Bowden cable (10), via an actuating inner cable end fitting (16) and a first inner cable end fitting (26) comprising a receptacle (28) for end fitting of actuating inner cable (12) for receiving the actuating inner cable end fitting (16), can axially slide within the space (72).

14. Method for the activation of a double latching system (100), according to claim 12 or 13, comprising the following steps:
a. tightening an actuating Bowden cable (10) comprising of an actuating conduit (14), an actuating inner cable (12) and an actuating inner cable end fitting (16);
b. pulling a first inner cable (22) of a first driven Bowden cable (20) by the actuating inner cable (12), wherein the first driven Bowden cable (20) comprises a first inner cable end fitting (26) with a receptacle (28) for the end fitting of the actuating inner cable (12) for receiving the actuating inner cable end fitting (16); wherein
the first inner cable end fitting (26) and the actuating inner cable end fitting (16) are arranged inside a housing (40) comprising in axial direction a first end (42) and an opposing second end (44), and the first inner cable (22) is arranged at the first end (42) of the housing (40);
c. pushing a slider (50) by the actuating conduit (14), such that the slider (50) can axially slide within the housing (40);
d. pulling a second inner cable (32) of a second driven Bowden cable (30) by the slider (50);
e. actuating a first latch (120) of a motor vehicle hood by the first driven Bowden cable (20); and
f. actuating a second latch (130) of the motor vehicle hood by the second driven Bowden cable (30).

15. Method according to claim 14, further comprising the step of pushing the slider (50) to a second side (44) of the housing (40) by means of a biasing means (60) where the actuating Bowden cable (10) extends through the housing (40).

## Patentansprüche

1. Bowdenzuganordnung (1) für Doppelverriegelungssysteme aufweisend:
a. einen Betätigungsbowdenzug (10), der einen Betätigungsinnenzug (12), eine Betätigungshülle (14) und ein Betätigungsinnenzugendstück (16) umfasst;
b. einen ersten angetriebenen Bowdenzug (20), der einen ersten Innenzug (22), eine erste Hülle (24) und ein erstes Innenzugendstück (26) mit einer Aufnahme (28) für das Endstück des Betätigungsinnenzuges (12) zur Aufnahme des Betätigungsinnenzugendstückes (16) aufweist;
c. einen zweiten angetriebenen Bowdenzug (30), der einen zweiten Innenzug (32) und eine zweite Hülle (34) umfasst;
d. ein Gehäuse (40), das in axialer Richtung ein erstes Ende (42) und ein gegenüberliegendes zweites Ende (44) aufweist, und wobei
e. die erste Hülle (24) mit dem ersten Ende (42) des Gehäuses (40) verbunden ist; und
f. einen Schieber (50), der in einer axialen Richtung innerhalb des Gehäuses (40) gleiten kann; wobei
g. der Betätigungsinnenzug (12) mit dem ersten Innenzug (22) verbunden ist, wobei das Betätigungsinnenzugendstück (16) in der Aufnahme des ersten Innenzugendstücks (26) innerhalb des Gehäuses (40) aufgenommen ist;
h. die Betätigungshülle (14) mit dem Schieber (50) verbunden ist; und
i. der zweite Innenzug (32) mit dem Schieber (50) verbunden ist.

2. Bowdenzuganordnung nach Anspruch 1, wobei die zweite Hülle (34) mit dem zweiten Ende (44) des Gehäuses (40) verbunden ist.

3. Bowdenzuganordnung nach Anspruch 1, wobei das Gehäuse (40) in axialer Richtung ein erstes Ende (42) und ein gegenüberliegendes zweites Ende (44) aufweist, und wobei
a. die erste Hülle (24) am ersten Ende (42) des Gehäuses (40) mit einem festen Teil verbunden ist, mit dem auch das Gehäuse (40) verbunden ist; und/oder
b. die zweite Hülle (34) am zweiten Ende (44) des Gehäuses (40) mit einem festen Teil verbunden ist, mit dem auch das Gehäuse (40) verbunden ist.

4. Bowdenzuganordnung nach einem der Ansprüche 1 bis 3, weiterhin aufweisend ein Vorspannmittel (60), das den Schieber (50) zur zweiten Seite (44) des Gehäuses (40) drückt.

5. Bowdenzuganordnung nach einem der Ansprüche 1 bis 4, wobei
a. der Schieber (50) eine erste Schieberseite (51) und eine zweite Schieberseite (55) aufweist, die der ersten Schieberseite (51) gegenüberliegt, und
b. die Betätigungshülle (14) und der zweite Innenzug (32) in axialer Richtung am Schieber (50) an der gleichen ersten Schieberseite (51) befestigt sind.

6. Bowdenzuganordnung nach einem der Ansprüche 1 bis 5, wobei
a. der Schieber (50) eine erste Schieberseite (51) und eine zweite Schieberseite (55) aufweist, die der ersten Schieberseite (51) gegenüberliegt, und
b. der Schieber (50) eine Schieberaufnahme (52) für die Betätigungshülle (14) in seiner ersten Schieberseite (51) aufweist, an der die Betätigungshülle befestigt ist.

7. Bowdenzuganordnung nach einem der Ansprüche 1 bis 6, wobei
a. der Schieber (50) eine erste Schieberseite (51) und eine zweite Schieberseite (55) aufweist, die der ersten Schieberseite (51) gegenüberliegt, und
b. der Schieber (50) an seiner zweiten Schieberseite (55) eine stabförmige Verlängerung (53) aufweist.

8. Bowdenzuganordnung nach einem der Ansprüche 1 bis 7, wobei das Gehäuse (40) einen Deckel (41) aufweist.

9. Bowdenzuganordnung nach Anspruch 8, wobei das Gehäuse (40) oder der Deckel (41) mindestens ein Verschlussmittel (49) zum Verschließen des Gehäuses (40) aufweist.

10. Bowdenzuganordnung nach einem der Ansprüche 1 bis 9, wobei die Betätigungshülle (14) so angeordnet ist, dass zumindest ein Teil davon an einem Kraftfahrzeug befestigt werden kann und zumindest ihr Endteil (17) sich relativ zum Kraftfahrzeug axial bewegen kann.

11. Bowdenzuganordnung nach einem der Ansprüche 1 bis 10, wobei das Gehäuse (40) und/oder die erste Hülle (24) und/oder die zweite Hülle (34) angeordnet sind, um an einem Kraftfahrzeug starr befestigt zu werden.

12. Haubendoppelverriegelungsarretierungssystem (100) eines Kraftfahrzeugs, aufweisend eine Bowdenzuganordnung (1) nach einem der Ansprüche 1 bis 11, wobei der erste angetriebene Bowdenzug (20) einen ersten Riegel (120) einer Haube und der zweite angetriebene Bowdenzug (30) einen zweiten Riegel (130) der Haube betätigt.

13. Bowdenzugverbinder (70) für Doppelverriegelungssysteme, aufweisend:
a. ein Gehäuse (40); und
b. einen Schieber (50), der in axialer Richtung innerhalb des Gehäuses (40) gleiten kann;
c. wobei der Schieber (50) mit einer Betätigungshülle (14) eines Betätigungsbowdenzugs (10) verbindbar ist;
d. der Schieber (50) mit einem zweiten Innenzug (32) eines zweiten angetriebenen Bowdenzugs (30) verbindbar ist;
e. das Gehäuse (40) weiterhin einen Raum (72) aufweist, wobei eine Verbindung zwischen einem ersten Innenzug (22) eines ersten angetriebenen Bowdenzuges (20) und einem Betätigungsinnenzug (12) des Betätigungsbowdenzuges (10) mittels eines Betätigungsinnenzugendstücks (16) und eines ersten Innenzugendstücks (26), das eine Aufnahme (28) für ein Endstück des Betätigungsinnenzugs (12) zur Aufnahme des Betätigungsinnenzugendstücks (16) aufweist, axial in dem Raum (72) gleiten kann.

14. Verfahren zur Aktivierung eines Doppelverriegelungssystems (100) gemäß Anspruch 12 oder 13, aufweisend die folgenden Schritte:
a. Anziehen eines Betätigungsbowdenzugs (10), aufweisend eine Betätigungshülle (14), einen Betätigungsinnenzug (12) und ein Betätigungsinnenzugendstück (16);
b. Ziehen eines ersten Innenzuges (22) eines ersten angetriebenen Bowdenzuges (20) durch den Betätigungsinnenzug (12), wobei der erste angetriebene Bowdenzug (20) ein erstes Innenzugendstück (26) mit einer Aufnahme (28) für das Endstück des Betätigungsinnenzuges (12) zur Aufnahme des Betätigungsinnenzugendstücks (16) aufweist; wobei das erste Innenzugendstück (26) und das Betätigungsinnenzugendstück (16) innerhalb eines Gehäuses (40) angeordnet sind, das in axialer Richtung ein erstes Ende (42) und ein gegenüberliegendes zweites Ende (44) aufweist, und der erste Innenzug (22) am ersten Ende (42) des Gehäuses (40) angeordnet ist;
c. Schieben eines Schiebers (50) mittels der Betätigungshülle (14), so dass der Schieber (50) axial im Gehäuse (40) gleiten kann;
d. Ziehen eines zweiten Innenzugs (32) eines zweiten angetriebenen Bowdenzugs (30) mittels des Schiebers (50);
e. Betätigen eines ersten Riegels (120) einer Haube eines Kraftfahrzeugs durch den ersten angetriebenen Bowdenzug (20); und
f. Betätigen eines zweiten Riegels (130) der Haube des Kraftfahrzeugs durch den zweiten angetriebenen Bowdenzug (30).

15. Verfahren nach Anspruch 14, weiterhin umfassend den Schritt des Schiebens des Schiebers (50) zu einer zweiten Seite (44) des Gehäuses (40) mittels eines Vorspannmittels (60), wobei sich der Betätigungsbowdenzug (10) durch das Gehäuse (40) erstreckt.

## Revendications

1. Ensemble à câble Bowden pour systèmes à double verrouillage, comprenant :
a. un câble Bowden d'actionnement (10), comprenant un câble interne d'actionnement (12), une gaine d'actionnement (14) et un raccord d'extrémité de câble interne d'actionnement (16) ;
b. un premier câble Bowden entraîné (20), comprenant un premier câble interne (22), une première gaine (24) et un premier raccord d'extrémité de câble interne (26), comprenant un réceptacle (28) pour le raccord d'extrémité du câble interne d'actionnement (12), destiné à recevoir le raccord d'extrémité de câble interne d'actionnement (16) ;
c. un second câble Bowden entraîné (30), comprenant un second câble interne (32) et une seconde gaine (34) ;
d. un boîtier (40) ayant en direction axiale une première extrémité (42) et une seconde extrémité opposée (44), et dans lequel
e. la première gaine (24) est reliée à la première extrémité (42) du boîtier (40) ; et
f. un coulisseau (50), qui peut coulisser dans une direction axiale au sein du boîtier (40) ; dans lequel
g. le câble interne d'actionnement (12) est relié au premier câble interne (22), le raccord d'extrémité de câble interne d'actionnement (16) étant logé à l'intérieur du réceptacle du premier raccord d'extrémité de câble interne (26) à l'intérieur du boîtier (40) ;
h. la gaine d'actionnement (14) est reliée au coulisseau (50) ;
i. le second câble interne (32) est relié au coulisseau (50).

2. Ensemble à câble Bowden selon la revendication 1, dans lequel la seconde gaine (34) est reliée à la seconde extrémité (44) du boîtier (40).

3. Ensemble à câble Bowden selon la revendication 1, dans lequel le boîtier (40) présente en direction axiale une première extrémité (42) et une seconde extrémité opposée (44), et dans lequel
a. la première gaine (24) est reliée à une partie fixe à laquelle le boîtier (40) est également connecté, à la première extrémité (42) du boîtier (40) ; et/ou
b. la seconde gaine (34) est reliée à une partie fixe à laquelle le boîtier (40) est également relié, à la seconde extrémité (44) du boîtier (40).

4. Ensemble à câble Bowden selon l'une des revendications 1 à 3, comprenant en outre un moyen de sollicitation (60), qui appuie le coulisseau (50) contre la seconde extrémité (44) du boîtier (40).

5. Ensemble à câble Bowden selon l'une des revendications 1 à 4, dans lequel :
a. le coulisseau (50) présente un premier côté de coulisseau (51) et un second côté de coulisseau (55) opposé au premier côté de coulisseau (51), et
b. la gaine d'actionnement (14) et le second câble interne (32) sont reliés au coulisseau (50) en direction axiale du même premier côté de coulisseau (51) .

6. Ensemble à câble Bowden selon l'une des revendications 1 à 5, dans lequel :
a. le coulisseau (50) présente un premier côté de coulisseau (51) et un second côté de coulisseau (55) opposé au premier côté de coulisseau (51), et
b. le coulisseau (50) comprend un réceptacle de coulisseau (52) pour la gaine d'actionnement (14) dans son premier côté de coulisseau (51) là où la gaine d'actionnement est reliée.

7. Ensemble à câble Bowden selon l'une des revendications 1 à 6, dans lequel :
a. le coulisseau (50) présente un premier côté de coulisseau (51) et un second côté de coulisseau (55) opposé au premier côté de coulisseau (51), et
b. le coulisseau (50) comprend un prolongement en forme de tige (53) sur son second côté de coulisseau (55).

8. Ensemble à câble Bowden selon l'une des revendications 1 à 7, dans lequel le boîtier (40) comprend un couvercle (41).

9. Ensemble à câble Bowden selon la revendication 8, dans lequel le boîtier (40) ou le couvercle (41) comprennent au moins un moyen de fermeture (49) pour fermer le boîtier (40).

10. Ensemble à câble Bowden selon l'une des revendications 1 à 9, dans lequel la gaine d'actionnement (14) est agencée pour qu'au moins une partie puisse être fixée à un véhicule motorisé et pour qu'au moins sa partie d'extrémité (17) soit capable de flotter axialement par rapport au véhicule motorisé.

11. Ensemble à câble Bowden selon l'une des revendications 1 à 10, dans lequel le boîtier (40) et/ou la première gaine (24) et/ou la seconde gaine (34) sont agencés pour être fixés rigidement à un véhicule motorisé.

12. Système de blocage de capot à double verrouillage (100) d'un véhicule motorisé, comprenant un ensemble à câble Bowden (1) selon l'une des revendications 1 à 11, dans lequel le premier câble Bowden entraîné (20) actionne un premier verrou (120) d'un capot et le second câble Bowden entraîné (30) actionne un second verrou (130) du capot.

13. Connecteur à câble Bowden (70) pour des systèmes à double verrouillage, comprenant :
a. un boîtier (40) ; et
b. un coulisseau (50), qui peut coulisser en direction axiale à l'intérieur du boîtier (40) ;
c. dans lequel le coulisseau (50) peut être relié à une gaine d'actionnement (14) d'un câble Bowden d'actionnement (10) ;
d. le coulisseau (50) peut être relié à un second câble interne (32) d'un second câble Bowden entraîné (30) ;
e. le boîtier (40) comprend en outre un espace (72) dans lequel peut coulisser axialement, à l'intérieur de cet espace (72), une liaison entre un premier câble interne (22) d'un premier câble Bowden entraîné (20) et un câble interne d'actionnement (12) du câble Bowden d'actionnement (10), via un raccord d'extrémité de câble interne d'actionnement (16) et un premier raccord d'extrémité de câble interne (26) comprenant un réceptacle (28) pour un raccord d'extrémité du câble interne d'actionnement (12) permettant de loger le raccord d'extrémité de câble interne d'actionnement (16) .

14. Procédé d'activation d'un système à double verrouillage (100), selon la revendication 12 ou 13, comprenant les étapes suivantes :
a. mise sous tension d'un câble Bowden d'actionnement (10) comprenant une gaine d'actionnement (14), un câble interne d'actionnement (12) et un raccord d'extrémité de câble interne d'actionnement (16) ;
b. traction exercée, par le câble interne d'actionnement (12), sur un premier câble interne (22) d'un premier câble Bowden entraîné (20), le premier câble Bowden entraîné (20) comprenant un raccord d'extrémité de premier câble interne (26) avec un réceptacle (28) pour le raccord d'extrémité du câble interne d'actionnement (12) afin de loger le raccord d'extrémité de câble interne d'actionnement (16) ; dans lequel
le raccord d'extrémité de premier câble interne (26) et le raccord d'extrémité de câble interne d'actionnement (16) sont agencés à l'intérieur d'un boîtier (40) comprenant en direction axiale une première extrémité (42) et une seconde extrémité opposée (44), et le premier câble interne (22) est agencé à la première extrémité (42) du boîtier (40) ;
c. pression exercée sur un coulisseau (50) par la gaine d'actionnement (14), de sorte que le coulisseau (50) puisse coulisser axialement à l'intérieur du boîtier (40) ;
d. traction exercée, par le coulisseau (50), sur un second câble interne (32) d'un second câble Bowden entraîné (30) ;
e. actionnement, par le premier câble Bowden entraîné (20), d'un premier verrou (120) d'un capot de véhicule motorisé ; et
f. actionnement, par le second câble Bowden entraîné (30), d'un second verrou (130) du capot de véhicule motorisé.

15. Procédé selon la revendication 14, comprenant en outre une étape d'appui du coulisseau (50) contre un second côté (44) du boîtier (40) par l'intermédiaire d'un moyen de sollicitation (60), là où le câble Bowden d'actionnement (10) s'étend au travers du boîtier (40).
